# EUROPÄISCHE PATENTSCHRIFT

(11) **EP 0 735 216 B1**
(45) Veröffentlichungstag und Bekanntmachung des Hinweises auf die Patenterteilung: **08.08.2001**
(21) Anmeldenummer: 96102150.8
(22) Anmeldetag: 14.02.1996
(51) Int. Cl.: E04H 9/14, E06B 9/00

(54) **Verfahren zur zeitweisen Abdichtung von porösem und gegebenenfalls durch Öffnungen unterbrochenem Mauerwerk gegen Hochwasser sowie Vorrichtung zur Durchführung desselben**
Method for temporary sealing porous masonry which is occasionally interrupted by openings against floods and device for carrying out the method
Procédé pour l'étanchéisation temporaire contre les inondations de maçonnerie poreuse, éventuellement munie d'ouvertures, et dispositif pour la réalisation du procédé

(30) Priorität: 29.03.1995 DE 19511559
(43) Veröffentlichungstag der Anmeldung: 02.10.1996
(73) Patentinhaber: GfB Gesellschaft für Bauwerksabdichtungen mbH, 56332 Wolken (DE)
(72) Erfinder: Sonnen, Klaus, D-56220 Bassenheim (DE); Hilgert, Wolf-Hasso, D-55444 Waldlaubersheim (DE)
(74) Vertreter: Werner, Hans-Karsten, Dr.Dipl.-Chem.

(56) Entgegenhaltungen:
- EP-A- 0 286 721
- WO-A-90/00648
- DE-A- 4 400 870
- GB-A- 2 114 197
- US-A- 4 488 386

## Beschreibung

Gegenstand der vorliegenden Erfindung ist ein Verfahren zur zeitweisen Abdichtung von oberirdischen porösem und gegebenenfalls durch Öffnungen unterbrochenem Mauerwerk gegen Hochwasser sowie eine Vorrichtung zur Durchführung des Verfahrens.

Nachdem in den letzten Jahren an vielen Flüssen und Bächen die Hochwasserkatastrophen schon bei geringen Niederschlägen verheerende Schäden angerichtet haben, wird auf verschiedenste Weise versucht, Maßnahmen zu entwickeln für die Bauwerkserhaltung, die Sanierung sowie Abdichtungen aller Art zu entwickeln, die bei Flutkatastrophen Schaden verhindern oder zumindest begrenzen.

Aus der DE-A-44 00 870 ist eine Vorrichtung zum Schutz von Objekten bekannt, welche alle Bauteile wie Rinne, Gummibahnen, Verbindungsschienen, Schrauben und Abdeckung in sich vereint. Gegebenenfalls vorhandene Öffnungen im Mauerwerk werden zuvor durch passende, abnehmbare Abdeckungen abgedeckt, die in etwa mit dem Mauerwerk fluchten. Die Rinne dient auch dazu, die Gummibahnen im aufgerollten Zustand zu lagern bis die Hochwassergefahr droht.

Insbesondere bei bereits bestehenden Gebäuden und Bauwerken ist es im nachhinein praktisch unmöglich mit erträglichem finanziellen Aufwand eine Komplettlösung zur Trockenhaltung aller Räume zu ermöglichen, beispielsweise durch nachträgliche Anbringung einer auftriebssicheren Wanne.

In vielen Fällen wird daher davon ausgegangen, daß die betroffenen Anwohner die Kellerräume und gegebenenfalls auch noch Aus der WO 90/00648 ist ein anderes und umständliches System bekannt, welches eine Weiterentwicklung eines anderen umständlichen Systems gemäß EP 0 286 721 darstellt. Diese Systeme verlangen eine fest im Boden installierte Vorrichtung, in welche die am Rand aufpumpbaren, gewebeverstärkten Gummiplanen eingelagert sind, so dass sie bei Bedarf (Hochwasser) von unten ausgefahren und aufgepumpt werden können. das Erdgeschoß als Stauraum für die steigenden Fluten verwenden, da fast alle älteren Gebäude an den Flüssen noch ohne Druckwasserabdichtung konstruiert und gebaut wurden. Es besteht dennoch die Aufgabe, die darüber liegenden Ebenen mit erträglichem Aufwand zumindest vorübergehend vollständig und wirksam gegen das Hochwasser zu schützen.

Dazu muß zunächst dafür gesorgt werden, daß auch bei Flutung der darunterliegenden Räume der Wasserstand so begrenzt wird, daß er nicht die Decke erreicht. Er muß somit oberhalb vorgegebener Höchststände abgepumpt werden. Dies ist aber praktisch nur möglich, wenn diese zu flutenden Räume durch Isoliermaßnahmen soweit geschützt werden, daß nur begrenzte Mengen an möglichst reinem Wasser in diese Räume eindringen können, so daß bei erreichen des vorgegebenen Höchststandes die abzupumpende Wassermenge relativ gering bleibt.

Zu diesen Isoliermaßnahmen gehören eine Reihe an sich bekannter Maßnahmen wie das Anbringen von druckfesten Schiebern an allen Durchdringungen wie Abwasserrohren, so daß diese schnell, einfach und sicher verschlossen werden können. Weiterhin sind druckfeste Abdichtungen von Kellerfenstern und Kellerschächten vorzusehen. Alle unmittelbar am Gebäude befindlichen leichten Anbauteile wie Fallrohre sind möglichst zu entfernen. Unebene Flächen sind zu begradigen und mittels hydraulischer Mörtel zu glätten. Die Gebäude sind möglichst umlaufend von Hand freizulegen und so von außen gegen eindringendes Wasser zu isolieren. Dies kann beispielsweise erfolgen durch Reinigen, Ebnen und Glätten der Wandfläche, Anbringen eines bituminösen Voranstriches zur Staubbindung und Haftvermittlung sowie Aufbringen einer modifizierten Heißbitumen-Spezielklebemasse mit einer Lage einer 2 mm dicken PVC weich Bahn, die so im Gieß- und Einwalzverfahren abgeklebt wird.

Im Gebäudeinnern können diese Isoliermaßnahmen bestehen aus dem Anbringen einer Bodenplatte aus Beton, die gegebenenfalls zum verstärktem Abfangen des Staudruckes von unten auch noch armiert sein kann. Die Porosität des Mauerwerks kann im unteren Bereich durch Aufbringen von Spritzbeton vermindert werden. Die Porosität des Mauerwerks gegen aufsteigendes Wasser kann durch Injektionen mit hydrophobierenden Mitteln vermindert werden. Insgesamt wird durch diese Maßnahmen erzielt, daß diese unteren Räume nur langsam und nur durch Sickerwasser geflutet werden und nicht wie bisher sehr häufig durch das stark verschmutzte Oberflächenwasser des Hochwassers.

Eine vollständige Abdichtung dieser unteren Räume ist vielfach schon aus statischen Gründen nicht zulässig. Es ist vielmehr nötig, diese Räume gezielt zu fluten, da anderenfalls der Außendruck des Wassers zu stark wird und den Kellerboden und die Seitenwände eindrücken kann. Sofern jedoch diese Räume nur mit reinem Wasser geflutet wurden, können sie nach Rückgang des Hochwassers leergepumpt und wieder verwendet werden, während anderenfalls auch noch der vom Hochwasser mitgebrachte Schlamm und Dreck mühsam und aufwendig wieder entfernt werden muß. Weiterhin können für reines Wasser Pumpen eingesetzt werden, die gegen Schlamm und Dreck empfindlich sind. Derartige Pumpen sind wesentlich preiswerter als Pumpen, die auch Schlamm und Dreck fördern können.

Zum gezielten Fluten der unteren Räume und einer Begrenzung der Flutungshöhe kann prinzipiell die gleiche Pumpe verwendet werden, die in Normalzeiten das am tiefsten Punkt zusammenlaufende Sickerwasser entfernt. Diese Pumpe muß dann nur bei Hochwasser umgestellt werden auf höhergelegene Sensoren, die beispielsweise 0,5 m unter der Unterkante der Kellerdecke angebracht werden. Damit ist dann gewährleistet, daß bei weiterem Anstieg das Flutungswassers nach außen abgepumpt wird. Die dabei abzupumpenden Wassermengen bleiben relativ gering, da durch die oben beschriebenen Isoliermaßnahmen nur noch ein begrenzter Wasserzutritt möglich ist.

Besondere Probleme bei der Absicherung gegen Hochwasser bilden die oberirdischen porösen und gegebenenfalls durch Öffnungen unterbrochenen Mauerwerke. Es besteht somit vor allem die Aufgabe, diese zeitweise gegen Hochwasser abzudichten, und zwar wirksamer und einfacher als dies mit den Vorrichtungen gemäß DE-A-44 00 870 möglich ist, da diese mit Spezialschlüsseln montiert und verschraubt werden müssen.

Diese Aufgabe wird erfindungsgemäß gelöst durch das Verfahren gemäß Anspruch 1 und die Vorrichtung gemäß Anspruch 6. Bevorzugte Ausführungsformen sind Gegenstand der übrigen Ansprüche.

Die erfindungsgemäßen vorgefertigten, reißfesten, biegsamen Folienbahnen werden vorzugsweise an der Oberkante aufgehängt mittels gegebenenfalls herausnehmbarer Hacken oder gegen Abrutschen gesicherter Schwerlastdübel. Insbesondere, wenn diese Hacken oder Schwerlastdübel herausnehmbar ausgestaltet sind, können die Dübellöcher in Normalzeiten mit glatten Einsätzen abgedeckt werden, so daß sie auch optisch kaum noch stören.

Die Oberkante der erfindungsgemäßen Folienbahnen kann im einfachsten Fall aufgehängt werden an verstärkten Ösen. Vorzugsweise weist jedoch die Oberkante eine oder mehrere Schlaufen auf, durch welche Rohre eingeschoben werden können. Diese Rohre werden dann in gewissen Abständen auf die bereits erwähnten Hacken oder gegen Abrutschen gesicherten Schwerlastdübeln aufgelegt. Selbstverständlich können aber auch andere Verstärkungen der Oberkante dazu verwendet werden, die Folienbahnen oberhalb des zu erwartenden höchsten Wasserstandes aufzuhängen

Die an beiden Seitenkanten und der Unterkante umlaufende wulstförmige Verdickung der Folienbahn wird erfindungsgemäß mit einem formstabilen Rahmen verklemmt. Dieser Rahmen besteht vorzugsweise aus korrosionsfestem Material, wie Aluminiumschienen, rostfreiem Stahl oder entsprechend formstabilem Kunststoff.

Diese Rahmen können zwar dauerhaft auf dem Mauerwerk angebracht sein. Es stört aber optisch wesentlich weniger, wenn diese Rahmen nur bei Bedarf eingesetzt werden und mit dem Mauerwerk mehr oder weniger fest verbunden werden. Diese Rahmen werden durch das Hochwasser zusammen mit der Folie an das Mauerwerk angedrückt, so daß sie keiner starken mechanischen Belastung ausgesetzt sind.

Wesentlich ist, daß auf diesen Rahmen Klemmvorrichtungen vorhanden sind, die in der Lage sind, die umlaufende wulstförmige Verdickung der Folienbahn an den formstabilen Rahmen anzuklemmen. Am einfachsten erfolgt dies durch eine aufschraubbare Klemmleiste. Dabei ist darauf zu achten, daß weder die Befestigung der Rahmen am Mauerwerk noch die Befestigung der Klemmleisten an dem Rahmen zu größeren Undichtichkeiten gegenüber Wasser führen. Beispielsweise sind an dem Rahmen angebrachte Rohrstutzen mit Innengewinde gut geeignet, die Schrauben der Klemmleisten aufzunehmen. Gleichzeitig können diese Rohrstutzen dazu dienen, in entsprechende Öffnungen des Mauerwerks eingesteckt zu werden, um den Rahmen vorübergehend mit dem Mauerwerk zu verbinden.

Die Abmessungen der vorgefertigten Folienbahnen sind auf das jeweilige zu schützende Objekt abzustimmen. Es ist aber sicherlich möglich, den größten Teil der zu schützenden Flächen mit Standardgrößen abzudecken und nur noch an den Kanten des Mauerwerks maßgeschneiderte Abmessungen einzusetzen.

Die wulstförmige Verdickung der Seitenkannten und Unterkanten kann in einfacher Weise hergestellt werden durch Einlegen eines mehr oder weniger elastischen Stranges aus Gummi oder Kunststoff in eine durch Umlegen und Verschweißen ausgebildete Schlaufe der Folie. An der Oberkante wird eine ähnliche Schlaufe durch Umlegen und Verschweissen der Folien hergestellt. In diese offenen Schlaufen lassen sich dann leicht entsprechende Rohrstücke einsetzen, die zum Aufhängen an Hacken oder gegen Abrutschen gesicherte Schwerlastdübel dienen.

Als Folien kommen prinzipiell alle reißfesten, biegsamen Folien in Frage, die bereits für andere Abdichtungszwecke eingesetzt werden. Besonders geeignet sind die Folien aus Weich-PVC, die schon jetzt zur Abdichtung von Fundamenten und Deponien eingesetzt werden. Prinzipiell können aber erfindungsgemäß auch entsprechende Folien aus anderen Kunststoffen wie Polyamiden, Polyalkylenen, Polyurethan und Gummi eingesetzt werden, sofern sie ausreichend reißfest und biegsam sind. Die Stärke dieser Folien sollte je nach Material zwischen 0,3 und 3 mm liegen. Sofern die Materialien nicht thermoplastisch verschweißbar sind, müssen sie zumindest mit geeigneten Klebern verklebbar sein. Weich PVC erfüllt in optimaler Weise alle Anforderungen an die erfindungsgemäßen Folienbahnen.

Als Einlage in die wulstförmige Verdickung eignet sich insbesondere sogenanntes Moosgummi. Als Material für den formstabilen Rahmen eignet sich insbesondere Aluminiumblech, welches bereits in erheblichem Umfang auch zur dauerhaften Abdichtung von der Oberkante isolierter Fundamente sowie von Flachdächern eingesetzt wird. Die leicht abgebogene Oberkante dieser Aluminiumprofile wird dabei meist mit dauerelastischem Material wie Silikon verklebt. Derartige Aluminiumprofile mit leicht abgebogener Seitenkante sind ausgezeichnet geeignet, zusammen mit einer ähnlich geformten Klemmschiene die wulstförmige Verdickung der Folienbahn aufzunehmen und fest zu verklemmen.

Das erfindungsgemäße Verfahren kann ohne weiteres in der hochwasserfreien Zeit vorbereitet werden, so daß dann kurz vor Eintreten des Hochwassers mit wenigen Handgriffen die erforderlichen Maßnahmen ergriffen werden können. Nach Ablaufen des Hochwassers können die Folienbahnen wieder entfernt, aufgerollt und beispielsweise in den flutbaren unteren Räumen gelagert werden. Bei entsprechender Kennzeichnung oder Nummerierung der Folienbahnen ist es möglich, ohne Zeitverlust die richtige Folienbahn an der richtigen Stelle aufzuhängen und mit dem Rahmen fest zu verklemmen. Das gleiche gilt für nur vorübergehend eingesetzte formstabile Rahmen. Wenn diese entsprechend gekennzeichnet oder nummeriert sind, können sie rasch an den dafür vorgesehenen Stellen eingesteckt und/oder befestigt werden.

Sofern das Mauerwerk durch Öffnungen wie Fenster, Türen etc. unterbrochen ist, werden hierfür passende, abnehmbare Gitterroste angefertigt, die bei Bedarf eingesetzt werden. Da diese Gitterroste in etwa mit dem Mauerwerk fluchten, können sie erfindungsgemäß in gleicher Weise wie das Mauerwerk durch die vorgehängte Folie gegen das Hochwasser abgedichtet werden. Wichtig ist allein, daß diese Gitterroste ausreichend stabil gegen den Außendruck des Wassers befestigt sind. Dies kann im einfachsten Fall durch überstehende stabile Laschen erfolgen. Größere Öffnungen machen es im allgemeinen erforderlich, die Gitterroste durch einsetzbare oder rasch verankerbare Abstützungen gegen den Außendruck des Hochwassers ausreichend abzusichern. Es ist dann auch erfindungsgemäß möglich, kleine Unterführungen unter ansonsten ausreichend stabilen Eisenbahndämmen zu verschließen, so daß diese insgesamt als Hochwasserschutzdamm wirken können.

Die Gitterroste sollten vorzugsweise keine scharfe Kanten haben, um Beschädigungen der Folienbahnen zu vermeiden. Der Abstand der einzelnen Stege der Gitterroste kann abhängig gemacht werden von dem verwendeten Folienmaterial und dem zu erwartenden Wasserdruck. Weich PVC Folien mit 2 mm Stärke sind ohne weiteres in der Lage, Abstände bis zu 15 cm zu überbrücken. Es genügt daher, wenn die Öffnungen der Gitterroste nicht größer als 15 cm sind.

Darüber hinaus ist es prinzipiell zu empfehlen, alle Dimensionierungen einschließlich der Flutungshöhe der tiefer gelegenen Räume von einem Statiker überprüfen zu lassen, um anderenfalls eintretende weitere Schäden an den Gebäuden durch Auftreiben, Rißbildung etc. zu vermeiden.

Selbstverständlich muß die Unterkante der erfindungsgemäßen Folien bis zu dem Bereich des Mauerwerks reichen, der ausreichend und sicher abisoliert ist. Schließlich dienen die erfindungsgemäßen Folienbahnen nur zur Absicherung des nicht entsprechend abisolierten porösen Mauerwerks sowie der darin gegebenenfalls vorhandenen Öffnungen wie Fenster und Türen.

## Patentansprüche

1. Verfahren zur zeitweisen Abdichtung von oberirdischem porösem und gegebenenfalls durch Öffnungen unterbrochenem Mauerwerk gegen Hochwasser, wobei kurz vor Eintreten des Hochwassers außen vor das Mauerwerk oberhalb des zu erwartenden höchsten Wasserstands vorgefertigte, reißfeste, biegsame Folienbahnen gehängt werden, deren beide Seitenkanten und Unterkanten eine umlaufende wulstförmige Verdickung aufweisen, die mit formstabilen Rahmen verklemmt wird, wobei die Rahmen dauerhaft oder nur vorübergehend fest mit dem Mauerwerk verbunden sind und wobei die gegebenenfalls vorhandenen Öffnungen im Mauerwerk zuvor durch passende, abnehmbare Gitterroste abgedeckt werden, die in etwa mit dem Mauerwerk fluchten.

2. Verfahren gemäß Anspruch 1, dadurch gekennzeichnet, daß die Aufhängung der Oberkante der Folienbahnen mittels gegebenenfalls herausnehmbarer Haken oder gegen Abrutschen gesicherter Schwerlastdübel erfolgt.

3. Verfahren gemäß Anspruch 1 und/oder 2, dadurch gekennzeichnet, daß die Aufhängung der Oberkante der Folienbahnen mittels herausnehmbarer, in eine oder mehrere Schlaufen der Folienbahnen eingeschobener Rohre erfolgt.

4. Verfahren gemäß einem der Ansprüche 1 bis 3, dadurch gekennzeichnet, daß während des Hochwassers die unterhalb der zu schützenden Ebenen befindlichen Räume aus statischen Gründen gezielt mit reinem Wasser geflutet werden und das Wasser nur oberhalb vorgegebener Höchststände abgepumpt wird.

5. Verfahren gemäß Anspruch 4, dadurch gekennzeichnet, dass die Räume unterhalb der zu schützenden Ebenen durch Isoliermaßnahmen langsam mit reinem Wasser flutbar ausgestaltet werden, so dass die abzupumpende Wassermenge relativ gering bleibt.

6. Vorrichtung zur Durchführung des Verfahrens gemäß den Ansprüchen 1 bis 3, bestehend aus vorgefertigten, reißfesten, biegsamen Folienbahnen und Stützen, dadurch gekennzeichnet, dass
a) beide Seitenkanten und Unterkanten der Folienbahnen eine wulstförmige Verdickung aufweisen und deren Oberkanten verstärkte Ösen oder eine oder mehrere Schlaufen aufweisen und
b)die Stützen ein dauerhaft oder vorübergehend fest mit dem Mauerwerk verbundener formstabiler Rahmen aus korrosionsfestem Material und mit einer aufgesetzten oder aufsetzbaren Klemmvorrichtung zur Aufnahme der wulstförmigen Verdickung der Folienbahnen ist.

7. Vorrichtung gemäß Anspruch 6, bestehend aus
c) zusätzlichen, passenden, abnehmbaren Gitterrosten.

8. Vorrichtung gemäß Anspruch 7, bestehend aus
d) zusätzlichen, einsetzbaren oder rasch verankerbaren Abstützungen für die Gitterroste.

## Claims

1. A process for the temporary sealing of aboveground porous stonework optionally comprising openings against flooding, wherein pre-fabricated, tear-resistant, flexible film webs are suspended outside in front of the stonework above the to-be-expected highest water level shortly before the beginning of the flood, both lateral edges and bottom edges of said film webs having circumferential, bead-shaped, thickened portions, said thickened portions being jammed with dimensionally stable frames, where the frames are rigidly connected with the stonework durably or only temporarily and where the optionally existing openings in the stonework are previously covered by fitting, removable grates which are substantially aligned with the stonework.

2. The process according to claim 1, characterized in that the top edge suspension of the film webs is realized by optionally removable hooks or heavy-duty dowels secured against slipping off.

3. The process according to claim 1 and/or 2, characterized in that the top edge suspension of the film webs is realized by removable tubes inserted into one or several loops of the film webs.

4. The process according to any one of claims 1 to 3, characterized in that the rooms below the floors to be protected during the flood are purposively flooded with pure water for static reasons and the water is pumped out only above given maximum levels.

5. The process according to claim 4, characterized in that the rooms below the floors to be protected are designed to be slowly floodable with pure water by means of insulation measures such that the amount of water to be pumped out remains relatively low.

6. A device for carrying out the process according to claims 1 to 3 consisting of pre-fabricated, tear-resistant, flexible film webs and supports, characterized in that
a) both lateral edges and the bottom edges of the film webs have bead-shaped, thickened portions and the top edges thereof have reinforced eyes or one or several loops and
b) the supports are a dimensionally stable frame of a corrosion-resistant material which is durably or only temporarily connected with the stonework in a rigid manner, said frame comprising an attached or attachable clamping device for receiving the bead-shaped, thickened portions of the film webs.

7. The device according to claim 6, further comprising
c) additional fitting, removable grates.

8. The device according to claim 7, further comprising
d) additional insertable or quickly anchorable supports for said grates.

## Revendications

1. Procédé d'étanchéification temporaire de maçonnerie en surface, poreuse et, le cas échéant, interrompue par des ouvertures ; contre les crues, où peu avant la survenance de la crûe, extérieurement devant la maçonnerie, au-dessus du niveau d'eau maximal attendu, sont accrochées de bandes de feuilles flexibles, résistantes à la déchirure, préfabriquées, dont les deux bords latéraux et bords inférieurs présentent un épaississement en forme de bourrelet, faisant le pourtour, serré à l'aide de cadres à stabilité de forme, les cadres étant reliés, de façon durable ou uniquement temporairement, rigidement à la maçonnerie et les ouvertures, existant le cas échéant dans la maçonnerie, étant préalablement couvertes par des caillebotis amovibles, ajustés, sensiblement alignés avec la maçonnerie.

2. Procédé selon la revendication 1, caractérisé en ce que l'accrochage du bord supérieur des bandes de feuilles s'effectue au moyen de crochets, le cas échéant extractibles, ou bien de chevilles pour charge lourde, fixées contre tout risque d'échappement par ripage.

3. Procédé selon les revendications 1 et/ou 2, caractérisé en ce que l'accrochage du bord supérieur des bandes de feuille s'effectue à l'aide de tubes extractibles, insérés dans une ou plusieurs boucles des bandes de feuille.

4. Procédé selon l'une des revendications 1 à 3, caractérisé en ce que, pendant la crûe, les espaces se trouvant au-dessous des plans à protéger sont, pour des raisons statiques, inondés à dessein avec de l'eau propre, et l'eau n'étant pompée qu'au-dessus de niveaux maximaux prédéterminés.

5. Procédé selon la revendication 4, caractérisé en ce que les espaces situés au-dessous des plans à protéger sont équipés, par des dispositions d'isolation, de façon à pouvoir être lentement noyés avec de l'eau propre, de manière que la quantité d'eau à évacuer par pompage reste relativement faible.

6. Dispositif de mise en oeuvre du procédé selon les revendications 1 à 3, constitué de bandes de feuille flexibles, résistantes à la déchirure, préfabriquées, et d'appuis, caractérisé en ce que
a) les deux bords latéraux et bords inférieurs des bandes de feuille présentent un épaississement en forme de bourrelet et leurs bords supérieurs présentent des oeillets renforcés, ou bien une ou plusieurs boucles, et
b) les appuis sont constitués d'un cadre à stabilité de forme, relié rigidement, de façon durable ou temporaire, à la maçonnerie et constitués d'un matériau résistant à la corrosion et avec un dispositif de serrage, rapporté ou susceptible d'être rapporté, pour recevoir l'épaississement en forme de bourrelet des bandes de feuille.

7. Dispositif selon la revendication 6, constitué
c) de caillebotis supplémentaires, amovibles, ajustés.

8. Dispositif selon la revendication 7, constitué
d) d'appuis supplémentaires susceptibles d'être insérés ou susceptibles d'être ancrés rapidement, pour les caillebotis.
